Europäisches Patentamt

European Patent Office

Office européen des brevets

(19)

(11) Veröffentlichungsnummer: **0 195 856**
**A2**

(12) **EUROPÄISCHE PATENTANMELDUNG**

(21) Anmeldenummer: **85116416.0**

(22) Anmeldetag: **21.12.85**

(51) Int. Cl.⁴: **B 23 K 7/02**

(30) Priorität: **18.01.85 DE 8501163 U**

(43) Veröffentlichungstag der Anmeldung: **01.10.86**
**Patentblatt 86/40**

(84) Benannte Vertragsstaaten: **AT DE GB**

(71) Anmelder: **AUTE Gesellschaft für autogene Technik mbH, Wassbergstrasse 28, CH-8127 Forch/ZH (CH)**

(72) Erfinder: **Thomma, Günther Karl-Heinz, Landsbergerstrasse 17, D-6200 Wiesbaden-Delkenheim (DE)**
Erfinder: **Schaub, Robert, Waldstrasse 14, CH-8400 Winterthur (CH)**
Erfinder: **Maag, Urs Albert, Peteracher 1, CH-8126 Zumikon (CH)**

(74) Vertreter: **Blumbach Weser Bergen Kramer Zwirner Hoffmann Patentanwälte, Sonnenbergerstrasse 43, D-6200 Wiesbaden 1 (DE)**

(54) **Brennschneidmaschine für das sichere Abtrennen genauester Stücklängen.**

(57) Bei einer Brennschneidmaschine für das sichere Abtrennen genauester Stücklängen von Brammen- oder Knüppelsträngen in Stahlstranggießanlagen mit einer Mitlaufvorrichtung zum hydraulischen, pneumatischen oder motorischen An- oder Aufklemmen einer mittels Maschinenwagen verfahrbaren Brennschneidmaschine umfaßt die Mitlaufvorrichtung (16, 26, 32) mindestens zwei Klemmeinrichtungen (26), sind die Klemmeinrichtungen (26) schon vor dem gewünschten Synchronstart bei erreichter Stücklänge mit hohem Druck gegen den Strang (1) gedrückt, und eine An- oder Aufklemmbacke ist als Meßrad (26) ausgebildet und gebremst, wobei das Lösen einer Kupplung (10) des Verfahrantriebs (11) den Maschinenwagen (4) freigibt.

EP 0 195 856 A2

ACTORUM AG

## Brennschneidmaschine für das sichere Abtrennen genauester Stücklängen

Die Erfindung betrifft eine Brennschneidmaschine für das sichere Abtrennen genauester Stücklängen von Brammen- oder Knüppelsträngen in Stahlstranggießanlagen mit einer Mitlaufvorrichtung zum hydraulischen, pneumatischen oder motorischen An- oder Aufklemmen einer mittels Maschinenwagen verfahrbaren Brennschneidmaschine.

Es sind derartige Brennschneidmaschinen bekannt, die mit dem Strang in Gleichlauf gebracht werden, nachdem unter dem Brenner eine gewünschte Stranglänge durchgelaufen ist. Dabei wird bei einer zangenartigen Anklemmeinrichtung ein Reibbacken oder Stempel aufgedrückt, während beim Aufklemmen ein Teil des Maschineneigengewichts zur Erzeugung der erwünschten Mitlaufreibung benutzt wird, während gleichzeitig das eine Gegenkraft durch Reibung auf der Laufbahn erzeugende Gewicht der Brennschneidmaschine entsprechend verringert wird. Dabei ist insbesondere von Vorteil, daß der Düsenabstand ohne weitere Bauteile sicher und genau immer wieder erreicht wird. Dabei besteht das Problem, die genau gewünschten Stücklängen zu erreichen. Um kaum oder nur schwer nutzbare Minderlängen an Strangstücken aus Stahlstranggießanlagen zu vermeiden, werden die Stücklängenvorwahlen durch Sicherheitszuschläge für alle möglichen Ungenauigkeitsquellen aufgebläht. Im Bereich des Abtrennens sind dies vorwiegend Durchrutschen der an- oder aufgeklemmten Brennschneidmaschine durch Betriebsmittelausfall oder Druckabfall des Betriebsmittels. Ein Durchrutschen kann auch durch relativ langsamen Aufbau des des Anpreß- bzw. Aufsetzdruckes erfolgen, wobei verschiedene Gießgeschwindigkeiten Ungenauigkeiten durch räumliche Trennung von Aufsetzkufe einerseits und Meßrolle andererseits sowie ungenaue Wiederholbarkeit des Maschinen-Nullpunktes und unterschiedliche Schrumpfung durch unterschiedliche Temperaturen der Strangteile im Brennschneidbereich eine Rolle spielen.

Der Erfindung liegt daher die Aufgabe zugrunde, eine Brennschneidmaschine verfügbar zu machen, die in sicherer Weise ein genaues Abtrennen von Stücklängen bei einem maschinell geringen Aufwand gewährleistet.

Die Erfindung besteht darin, daß bei einer Brennschneidmaschine der eingangs genannten Art die Mitlaufvorrichtung mindestens zwei Klemmeinrichtungen umfaßt, daß die Klemmeinrichtungen schon vor dem gewünschten Synchronstart bei erreichter Stücklänge mit hohem Druck gegen den Strang gedrückt sind, ohne daß eine Mitnahme erfolgt, und daß eine An- oder Aufklemmbacke als Meßrad ausgebildet und gebremst ist, wobei das Lösen einer Kupplung des Verfahrantriebes den Maschinenwagen freigibt.

Auf diese Weise wird eine sichere Wiederholbarkeit ermöglicht sowie die Genauigkeiten der Stücklängen verbessert, so daß damit die Sicherheitszuschläge bei der Vorwahl verringert werden können.

Mit Vorteil sind die beiden Klemmeinrichtungen mit einem gemeinsamen Zylinder versehen, der beim Ausfall eines Arbeitsmediums ein zweites zuschaltbares Arbeitsmedium zuführt.

Zweckmäßig ist dabei vorgesehen, daß die Reibung zwischen Strang und Brennschneidmaschine genügend groß ist, um diese rutschfrei mit dem Strang beim Öffnen der Kupplung zu bewegen.

Um das zu erreichen, ist entweder das Produkt aus Maschinengewicht oder Gleitreibung der Laufräder auf den Laufschienen wesentlich größer, oder es ist eine zusätzliche Schienenbremse an der Brennschneidmaschine montiert, die mit dem Öffnen der Kupplung des Verfahrantriebes sich löst.

Zur genauen Messung ist eine getrennte Meßrolle genau gegenüber der Klemmeinrichtung angeordnet.

In ihrer Weiterbildung sieht die Erfindung vor, daß die Aufsitzkufen der Klemmarme der Klemmeinrichtung aus einer drehbar gelagerten, von Kühlmittel durchflossenen Welle mit einem oder mehreren Meßrädern bestimmten Umfangs besteht, die an einem Ende einen Impulsgeber zum Messen der unter dem Meßrad reibend durchlaufenden Stranglänge trägt.

Dabei sind zweckmäßig die Aufsitzkufen oder Klemmarme der Klemmeinrichtung der Brennschneidmaschine mit hoch verschleißfesten, hitzebeständigen und leicht austauschbaren Schleifbacken ausgestattet, die ein reibendes Gleiten am Strang mit voller Klemmkraft ermöglichen.

In vorteilhafter Weise ist ein Temperaturmeßgerät vorgesehen, das auf die Brammenwärme durch Berührung kurz vor Schnittende für die Folgebramme anspricht und dessen analoge Meßergebnisse digital ausgewertet und als Korrekturfaktor für die Schrumpfung in der Stücklängenvorwahl einer Längenmeßeinrichtung verwertet werden.

In ihrer Weiterbildung schlägt die Erfindung vor, daß die Längenmeßeinrichtung der Brennschneidmaschine für die Nutzung der analogen Geschwindigkeitsmessung der Gießgeschwindigkeit nach digitaler Auswertung in Form von Korrekturfaktoren für die Stücklängenvorwahl ausgestattet ist. Gemäß einer weiteren vorteilhaften Ausführungsform ist eine eingebaute oder getrennt installierte Meßrolle der Brennschneidmaschine für die Stücklängenmessung auch zur Stranggeschwindigkeitsmessung verwendbar, z.B. durch die Anzahl der in der Zeiteinheit anfallenden Impulse.

Die vorliegende Erfindung beansprucht neben der Gesamtheit auch, daß wirksam die einzelnen Merkmale zur Erreichung der zugrunde liegenden Aufgabe eingesetzt werden können.

Die Erfindung soll anhand von Ausführungsbeispielen unter Bezugnahme auf die beigefügten Zeichnungen näher erläutert werden. In den Zeichnungen zeigen:

Fig. 1 eine Seitenansicht einer Brennschneidmaschine;

Fig. 2 eine Vorderansicht der Brennschneidmaschine nach Fig. 1, teilweise im Schnitt, längs der Linie A-B in Fig. 1; und

Fig. 3 eine schematische Darstellung der Druckmittelzufuhr.

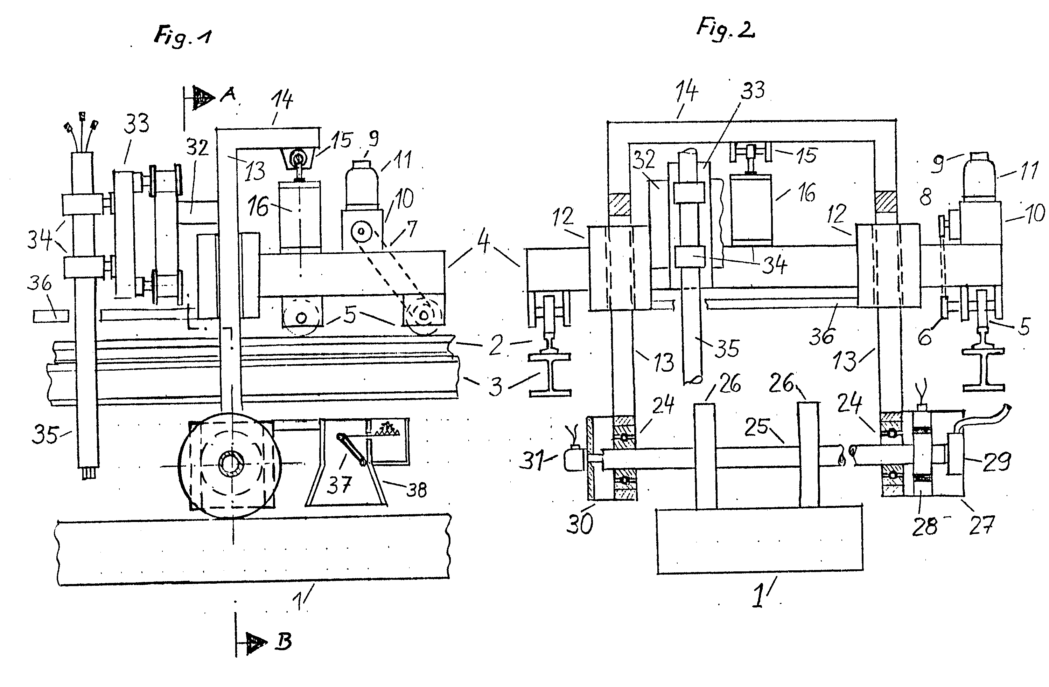

In den Fig. 1 und 2 ist eine Brennschneidmaschine dargestellt, die längs einer über dem Brammenstrang 1 angeordneten Laufbahn 2 mit Hilfe ihres Maschinenwagens 4 verfahrbar ist. Zu diesem Zweck ist der Maschinenwagen 4 mit Lauf- und Führungsrädern 5 ausgestattet, die sich entlang der Laufbahn 2 bewegen, die auf Stützträgern 3 angeordnet ist. Eines der Laufräder 5 ist mit einem Kettenrad 6 versehen, über das eine Antriebskette 7 läuft, die von einem Kettenritzel 8 angetrieben wird. Das Kettenritzel 8 steht über eine Elektrokupplung 9 und ein Getriebe 10 mit einem Verfahrmotor 11 in Verbindung. In den Senkrechtführungen 12 laufen Schildsäulen 13, die ein Querhaupt 14 tragen, an dem über ein Kolbenlager 15 ein Hubzylinder 16 befestigt ist.

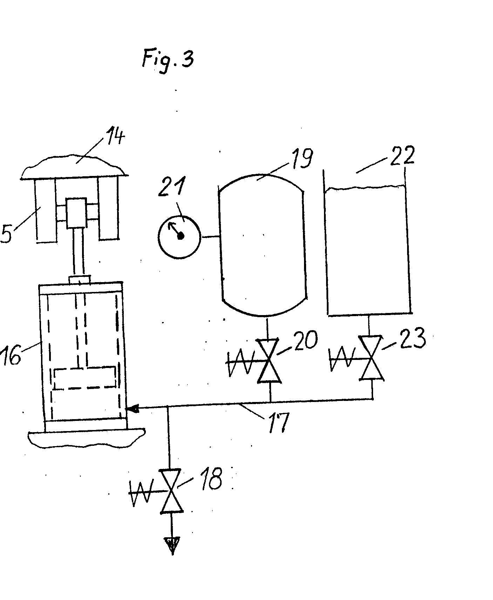

Wie im einzelnen in Fig. 3 dargestellt ist, führt zum Hubzylinder 16 eine Leitung 17, die mit einem Ablaßmagnetventil 18 versehen ist. Ein Druckluftversorgungsbehälter 19 ist über ein Druckluft-Magnetventil 20 und ein Druckwasserversorgungsbehälter 22 über ein Druckwassermagnetventil 23 , das öffnet, wenn der Druckwächter 21 einen Druckabfall im Druckluftversorgungsbehälter 19 feststellt, verbunden.

Wie Fig. 2 zeigt, ist in Wellenlagern 24 in den Schildsäulen 13 eine Welle 25 gelagert, die Meß- und Aufsetzräder 26 trägt. Durch den Absenkvorgang in den Senkrechtführungen 12 werden auf die Bramme 1 die Meß- und Aufsetzräder 26 abgesenkt und damit ebenfalls die an den Schildsäulen 13 angebrachten Brennerlaufbahn 32 und Brennerwagen 33 , der den Brennerhalter 34 trägt, in dem der Brenner 35 sitzt. Damit erreicht der Brenner 35 in Bezug auf die Oberfläche des Brammenstranges 1 den richtigen, in den Brennerhaltern 34 fest eingestellten Brennerabstand, auch Düsenabstand genannt. Um den Betrieb des Anhebens und Absenkens mit Hilfe des Hubzylinders 16 sicher zu gestalten, wird dieser normalerweise mit Druckluft über die Leitung 17 aus dem Druckluftbehälter 19 betrieben. Zum Anheben wird über das Magnetventil 20 Druckluft über die Leitung 17 in den Hubzylinder 16 gespeist, während beim Absenken das Magnetventil 20 geschlossen wird und das Ablaßmagnetventil 18 öffnet. Stellt der Druckwächter 21 den Ausfall bzw. Abfall des Druckes der Druckluft fest, wird das Magnetventil 23 geöffnet, so daß die Anlage mit dem Druckwasserbehälter 22 betrieben werden kann. Dieses System kann natürlich auch für Klemmeinrichtungen mit Anklemmhebel Verwendung finden. Es ist auch möglich, das Absenken zur Maschinenmitnahme durch einen elektromechanischen Hubantrieb zu bewirken und zur Sicherheit einen Hubzylinder mit eigener Versorgung zur Verfügung zu halten oder umgekehrt. Auch können verschiedene Kombinationen von Anklemm-, Aufklemm- und Aufsetzeinrichtungen Anwendung finden und verschiedene Betriebsmittel, wie Sauerstoff, Stickstoff usw., oder auf der Brennschneidmaschine installierte Druckgasflaschen im Sinne des oben beschriebenen Sicherheitssystems vorgesehen werden.

Um einen möglichst schnellen Aufbau der größtmöglichen Mitlaufreibung zu erzielen, werden die Backen der Klemmeinrichtungen schon vor Durchlauf des gewünschten, abzutrennenden Strangstückes unter dem Brenner 35 ausreichend mit voller Reibungskraft an den Brammenstrang 1 angelegt, wobei die Maschine trotz großer Reibung noch gut festgehalten wird, bis die gewünschte Stücklänge erreicht ist. In diesem Moment wird durch Öffnen der Elektrokupplung 9 bei stehendem Verfahrmotor mit Bremse 11 die Maschine freigegeben, wobei das Produkt aus Maschinengewicht und Gleitreibung der Laufräder auf den Laufschienen wesentlich größer ist, oder es wird eine zusätzliche, nicht dargestellte Schienenbremse an der Brennschneidmaschine gelöst. Zu diesem Zweck sind die Aufsitzkufen oder Backen der Klemmarme der Klemmeinrichtung der Brennschneidmaschine mit hoch verschleißfesten, hitzebeständigen Materialien ausgestattet und können leicht ausgetauscht werden, wenn ein nicht zu vermeidender, zu großer Verschleiß aufgetreten ist. Auch können die Aufsitzkufen oder Klemmarme der Klemmeinrichtung mit Kühlmittel durchflossen sein, wie auch die Welle 25, die die Meß- und Aufsetzräder 26 trägt, die die Funktion einer Aufsitzkufe übernehmen. Für die Kühlung der Welle 25 und der Meß- und Aufsetzräder 26 ist eine Drehdurchführung 29 vorgesehen, die durch ein Haltegerät 27 an einer Schildsäule 13 befestigt ist. Zum Mitlauf wird die Welle 25 durch die Bremse 28 stillgesetzt, und die Meßräder 26 werden plötzlich zu Aufsetzrädern 26, da sie zuvor mit voller Reibungskraft aufgesetzt der Bewegung des Stranges 1 entsprechend mitliefen. Ein elektronisches Antiblockiersystem, wie es von den Kraftfahrzeugen her bekannt ist, verhindert beim Abbremsen ein Durchrutschen, wobei es jedoch allgemein als ausreichend erscheint, den Bremsvorgang der Meß- und Aufsetzräder 26 durch die Bremse 28 rutschfrei durch kontrollierte Zunahme der Bremskraft an der Bremse im Vergleich zu einer vorgegebenen Impulszahl, die einem Bremsweg entspricht und genau in der elektronischen Längenmeßeinrichtung berücksichtigt wird, auszuführen.

Wie Fig. 2 weiter zeigt, ist am gegenüberliegenden Ende der Welle 25 in einem Halter 30 ein Impulsgeber 31 vorgesehen, der als Längenmeßeinrichtung mit den Meßrädern 26 und der Welle 25 ständig mitdreht, wenn sich die Brennschneidmaschine im Stillstand oder Rücklauf befindet. Damit ist die vorteilhafte örtliche Einheit von Klemmeinrichtung und Längenmeßeinrichtung erzielt. Vorteilhaft kann die Längenmessung auch in der Nähe des Brenners 35 durchgeführt werden.

Da der Brammenstrang 1 während eines Gusses oder eines Mehrfachgusses verschiedene Temperaturen haben kann, ist ein Temperaturmeßgerät 38 vorgesehn, das auf die Brammenwärme durch Berührung kurz vor Schnittende für die Folgebramme anspricht, und dessen analoge Meßergebnisse digital ausgewertet und als Korrekturfaktor für die Schrumpfung bei der Stücklängenvorwahl einer Längenmeßeinrichtung verwertet werden. Dieses Temperaturmeßgerät besteht aus einem empfindlichen Thermometer in Form eines Bimetalls 37. Das Bimetall 37 ist in einem Gehäuse 38 in der Nähe des Meßrades 26 nahe am Brammenstrang 1 angeordnet, und die Verformungen des Bimetalls 37 werden gemessen und in elektrische Impulse umgewandelt.

Durch das Gehäuse 38 werden Wärmestrahlungen vom Brennschneidvorgang abgeschirmt, wie überhaupt ein Abschirmen des Meßbereichs gegen Zugluft stattfinden muß. Aus diesem Grund ist das Gehäuse 38 dicht über der Oberfläche des Brammenstranges 1 vorgesehen.

Durch die Stranggießanlage bedingt, kann sich je nach Querschnittsgröße und Materialzusammensetzung des Brammenstranges 1 die gewählte vorteilhafteste Gießgeschwindigkeit zum Teil erheblich ändern. Je nach Ausführung der Brennschneidmaschine kann es bei einem unkontrollierten Restrutschen zum Beginn des Mitlaufes kommen, das mit der Größe der Gießgeschwindigkeit steigt. Die Übernahme der Gießgeschwindigkeit zum Zeitpunkt des Mitlaufbeginns als digitalem Korrekturfaktor in die Längenmeßeinrichtung ist möglich. Bei der Ausführung der Brennschneidmaschine mit Aufsetz- und Meßrädern 26 läßt sich die jeweilige Gießgeschwindigkeit leicht elektronisch durch Aufzählen der Impulse vom Impulsgeber 31 innerhalb einer kurzen Zeitspanne, z.B. 6 Sekunden, und am Ende derselben auf das Zehnfache vergrößert als Geschwindigkeit in mm/min zur Verfügung stellen, zumal die Gießgeschwindigkeit sich nur langsam ändert und nur für eine ergänzende Verbesserung gebraucht wird. Um die Brennerlaufbahn 32 mit dem Brennerwagen 33, der über Brennerhalter 34 die Brenner 35 trägt, zu schützen, ist unter der Brennerlaufbahn 32 ein Strahlungsschirm 36 vorgesehen, der Durchbrechungen aufweist, durch die der Brenner 35 sich erstreckt.

Patentansprüche

1. Brennschneidmaschine für das sichere Abtrennen genauester Stücklängen von Brammen- oder Knüppelsträngen in Stahlstranggießanlagen mit einer Mitlaufvorrichtung zum hydraulischen, pneumatischen oder motorischen An- oder Aufklemmen einer mittels Maschinenwagen verfahrbaren Brennschneidmaschine,
d a d u r c h   g e k e n n z e i c h n e t ,
daß die Mitlaufvorrichtung (16, 26, 32) mindestens zwei Klemmeinrichtungen (26) umfaßt,
daß die Klemmeinrichtungen (26) schon vor dem gewünschten Synchronstart bei erreichter Stücklänge mit hohem Druck gegen den Strang (1) gedrückt sind, ohne daß eine Mitnahme erfolgt, und
daß eine An- oder Aufklemmbacke als Meßrad (26) ausgebildet und gebremst ist, wobei das Lösen einer Kupplung (10) des Verfahrantriebs (11) den Maschinenwagen (4) freigibt.

2. Brennschneidmaschine nach Anspruch 1, dadurch gekennzeichnet, daß die beiden Klemmeinrichtungen (16, 26, 32) mit einem gemeinsamen Zylinder (16) versehen sind, der beim Ausfall eines Arbeitsmediums (13) ein zweites zuschaltbares Arbeitsmedium (20) zuführt.

3. Brennschneidmaschine nach Anspruch 1 oder 2, dadurch gekennzeichnet, daß die Reibung zwischen Strang (1) und Brennschneidmaschine (26) genügend groß ist, um diese rutschfrei mit dem Strang (1) beim Öffnen der Kupplung (10) zu bewegen.

4. Brennschneidmaschine nach Anspruch 3, dadurch gekennzeichnet, daß das Produkt aus Maschinengewicht und Gleitreibung der Laufräder (5) auf den Laufschienen (2) wesentlich größer ist.

5. Brennschneidmaschine nach Anspruch 3, dadurch gekennzeichnet, daß eine zusätzliche Schienenbremse an der Brennschneidmaschine montiert ist, die mit dem Öffnen der Kupplung (10) des Verfahrantriebs (11) sich löst.

6. Brennschneidmaschine nach Anspruch 3, dadurch gekennzeichnet, daß eine getrennte Meßrolle genau gegenüber der Klemmeinrichtung (16, 26, 32) angeordnet ist.

7. Brennschneidmaschine nach einem der Ansprüche 1 bis 6, dadurch gekennzeichnet, daß die Aufsitzkufen (26) oder Klemmarme der Klemmeinrichtung (16, 26, 32) aus einer drehbar gelagerten, von Kühlmittel durchflossenen Welle (25) mit einem oder mehreren Meßrädern (26) bestimmten Umfangs bestehen, die an einem Ende einen Impulsgeber (31) zur Messung der unter dem Meßrad (26) reibend durchlaufenden Stranglänge trägt.

8. Brennschneidmaschine nach einem der Ansprüche 1 bis 7, dadurch gekennzeichnet, daß die Aufsitzkufen (26) oder Klemmarme der Klemmeinrichtung (16, 26, 32) der Brennschneidmaschine mit hoch verschleißfesten, hitzebeständigen und leicht austauschbaren Schleifbacken ausgestattet sind und ein reibendes Gleiten am Strang (1) mit voller Klemmkraft ermöglichen.

9. Brennschneidmaschine nach einem der Ansprüche 1 bis 8, dadurch gekennzeichnet, daß ein Temperaturmeßgerät (37, 38) vorgesehen ist, das auf die Brammenwärme durch Berührung kurz vor Schnittende für die Folgebramme anspricht und dessen analoge Meßergebnisse digital ausgewertet und als Korrekturfaktor für die Schrumpfung in der Stücklängenvorwahl einer Längenmeßeinrichtung verwertet werden.

10. Brennschneidmaschine nach einem der Ansprüche 1 bis 9, dadurch gekennzeichnet, daß die Längenmeßeinrichtung der Brennschneidmaschine für die Nutzung der analogen Geschwindigkeitsmessung der Gießgeschwindigkeit nach digitaler Auswertung in Form von Korrekturfaktoren für die Stücklängenvorwahl ausgestattet ist.

11. Brennschneidmaschine nach einem der Ansprüche 1 bis 9, dadurch gekennzeichnet, daß die eingebaute oder getrennt installierte Meßrolle der Brennschneidmaschine für die Stücklängenmessung auch zur Stranggeschwindigkeitsmessung verwendbar ist, z.B. durch die Anzahl der in der Zeiteinheit anfallenden Impulse.

Fig. 1

Fig. 2

0195856

Fig. 3